# EUROPÄISCHE PATENTANMELDUNG

(11) **EP 2 645 331 A1**
(43) Veröffentlichungstag der Anmeldung: **02.10.2013**
(21) Anmeldenummer: 13158898.0
(22) Anmeldetag: 13.03.2013
(51) Int. Cl.: G06T 7/00, G08G 1/097

(54) **Verfahren zur Verifizierung der Ausrichtung eines Verkehrsüberwachungsgerätes**

(30) Priorität: 26.03.2012 DE 102012102600
(71) Anmelder: JENOPTIK Robot GmbH, 40789 Monheim am Rhein (DE)
(72) Erfinder: Trummer, Dr. Michael, 07745 Jena (DE); Lehning, Dr. Michael, 31137 Hildesheim (DE); Seidel, Wolfgang, 07749 Jena (DE)
(74) Vertreter: Schaller, Renate

(57) **Zusammenfassung**

Verfahren zum Verifizieren einer Messposition für ein Verkehrsüberwachungsgerät (1), bei dem mit einer Kamera (2) eines in einer Messposition ausgerichteten Verkehrsüberwachungsgerätes (1) ein Eichreferenzbild von einer Verkehrsszene aufgenommen wird und zur Verifizierung der Messposition mit einer Kamera (2), welche diese Kamera (2) oder eine mitsamt dem Verkehrsüberwachungsgerät (1) ausgetauschte andere Kamera (2) sein kann, in Zeitabständen Eichtestbilder aufgenommen werden, die mit dem Eichreferenzbild verglichen werden, wobei die Abbildungen identischer statischer Prüfmerkmale ausgewählt und deren Lageabweichungen zueinander ermittelt und mit festgelegten Bildtoleranzgrenzen verglichen werden, um durchgeführte Messungen als gültig zu bestätigen oder zu verwerfen.

## Beschreibung

In der Verkehrsüberwachung kommen Verkehrsüberwachungsgeräte (VÜG) zum Einsatz, die, um definierte Messbedingungen zu schaffen, zur Fahrbahn oder Merkmalen der Fahrbahn, wie Haltebalken, in eine Messposition ausgerichtet werden müssen.

Bei stationären VÜGs ist es üblich Gehäuse oder Trägersysteme auf Masten oder an Brückenelementen visuell grob ausgerichtet zu stationieren, wobei das Gehäuse bzw. das Trägersystem eine Bezugsfläche aufweist zu der das VÜG definiert in das Gehäuse ein- bzw. auf das Trägersystem aufgesetzt wird. Mit der Ausrichtung des VÜGs in die Messposition nimmt diese Bezugsfläche eine bestimmte Relativlage zur Fahrbahn ein, deren dauerhafte Stabilität überprüft werden muss, um stets korrekte Messergebnisse zu gewährleisten. Die Kenntnis von Lageabweichungen der Position des VÜG gegenüber der Messposition, kann dazu führen, dass die Messergebnisse unverändert akzeptiert werden, wenn diese innerhalb von vorgegebenen Toleranzgrenzen liegen oder aber kann eine gezielte Korrektur der veränderten Position zurück in die Messposition ermöglichen.

Lageabweichungen von der Messposition zu verifizieren, kann erforderlich sein zum einen, um die Langzeitstabilität der Messposition eines einmalig eingerichteten VÜGs zu überwachen und zum anderen, um die Einnahme einer für ein VÜG eingerichteten Messposition durch ein Mess-VÜG zu ermöglichen und zu verifizieren.

Praktisch kommen solche Anwendungen z. B. vor, wenn zur Verkehrsüberwachung an verschiedenen Orten gleiche Gehäuse installiert werden, in die dann wahlweise, zeitlich nacheinander ein VÜG eingesetzt wird. Mit Hilfe eines VÜGs wird in den Gehäusen jeweils eine Bezugsfläche, die während der Einrichtung der Messposition fest mit dem VÜG verbunden ist und die anschließend im Gehäuse fixiert wird, relativ zur Fahrbahn ausgerichtet. Die Position, welche die Bezugsfläche einnimmt, wenn das VÜG in der Messposition ist, soll ebenfalls als Messposition verstanden werden. Nachdem die Bezugsfläche die Messposition eingenommen hat und diese fixiert ist, kann das VÜG entfernt werden. Zu einem späteren Zeitpunkt kann das gleiche oder auch ein anderes VÜG in das Gehäuse definiert zu der Bezugsfläche eingesetzt werden und nimmt damit automatisch die Messposition ein.

Ein VÜG umfasst insbesondere einen Messsensor. Dabei kann es sich z. B. um eine Digitalkamera, einen Laserscanner oder einen Radar-Sensor handeln.

Eine Digitalkamera wird so in eine Messposition ausgerichtet, dass die Digitalkamera selbst und/oder ein weiterer beigeordneter Sensor eine definierte Aufgabe erfüllen können, womit drei Winkel im Raum festgelegt werden, welche die Ausrichtung der Digitalkamera und ggf. des weiteren Sensors beschreiben.

Unabhängig davon welche konkrete Messposition eingerichtet wird und wie das erfolgt, kann mit dem erfindungsgemäßen Verfahren die Einhaltung der eingestellten Messposition verifiziert werden.

Auch ein Radar-Sensor oder ein Laserscanner werden in Abhängigkeit davon, ob sie seitlich oder oberhalb der Fahrbahn angeordnet werden, so ausgerichtet, dass deren ausgezeichnete Achsen in vorgegebenen Winkeln auf die Fahrbahn treffen.

Die Möglichkeit einer korrekten Ausrichtung der VÜGs vor Beginn der Verkehrsüberwachung und eine wiederholbare Verifizierung der vorgenommenen Ausrichtung einschließlich einer eventuellen Korrektur bei Dejustierung ist eine Voraussetzung für die Zulassung solcher VÜGs.

Es ist nicht Gegenstand der vorliegenden Erfindung ein Verfahren zu schaffen, mit dem eine Messposition eingerichtet werden kann, sondern ein Verfahren zu schaffen mit dem eine eingerichtete Messposition mit verschiedenen VÜGs, die jeweils eine Kamera aufweisen, verifiziert werden kann.

In der nicht vorveröffentlichten Patentanmeldung DE 10 2011 050 660 ist ein Verfahren zur Ausrichtung und zur Kontrolle der Ausrichtung eines Verkehrsüberwachungsgerätes (VÜG) zu einem Fahrbahnrand beschrieben.

Das VÜG besteht hier aus einem Radarsensor als Messsensor und einer Kamera, die bereits werksseitig zueinander justiert sind und somit eine feste, bekannte Lagebeziehung miteinander einnehmen. Vorteilhaft sind der Radarsensor und die Kamera so zueinander vorjustiert, dass eine Radarachse des Radarsensors und die Kameraachse der Kamera einen Winkel miteinander einschließen, den sie auch in der Messposition miteinander einschließen. Das VÜG gilt dann als in eine Messposition ausgerichtet, wenn die Kameraachse einen vorgegebenen Soll-Kamerawinkel mit dem Fahrbahnrand einschließt.

Zum Ausrichten des VÜG in eine Messposition wird das VÜG in einem Abstand zu einem Fahrbahnrand aufgestellt und der Soll-Kamerawinkel wird mit Augenmaß näherungsweise eingestellt, in dem das VÜG um eine vertikale Achse gedreht wird. Anschließend wird mit der Kamera eine erste Abbildung als Digitalbild erstellt, aus der Geraden in Fahrtrichtung abgeleitet werden, rechnerisch ein Ist-Fluchtpunkt für die Geraden bestimmt wird und dieser mit einem vom Soll-Kamerawinkel abhängigen, vorgegebenen Soll-Fluchtpunkt verglichen wird. Das VÜG wird solange horizontal geschwenkt und währenddessen werden weitere Abbildungen erstellt, aus denen jeweils der momentane Ist-Fluchtpunkt ermittelt und mit dem vorgegebenen Soll-Fluchtpunkt verglichen wird, bis dessen Abweichung vom Soll-Fluchtpunkt innerhalb einer vorgegebenen Toleranzgrenze liegt, womit das VÜG als in die Messposition (dort Betriebsposition) ausgerichtet gilt.

Zur Verifikation und gegebenenfalls erforderlichen Korrektur von Lageabweichungen der Ausrichtung von der Messposition eines zuvor ausgerichteten VÜG wird wie folgt vorgeschlagen.

Es wird eine erste Abbildung als Digitalbild erstellt, rechnerisch der Ist-Fluchtpunkt ermittelt und mit einem vom Soll-Kamerawinkel abhängigen, vorgegebenen Soll-Fluchtpunkt verglichen. Sofern die Abweichung des Ist-Fluchtpunktes vom Soll-Fluchtpunkt nicht innerhalb einer vorgegebenen Toleranzgrenze liegt, wird das VÜG solange horizontal geschwenkt und währenddessen werden weitere Abbildungen erstellt, aus denen jeweils der momentane Ist-Fluchtpunkt ermittelt und mit dem vorgegebenen Soll-Fluchtpunkt verglichen wird, bis dessen Abweichung vom Soll-Fluchtpunkt innerhalb der vorgegebenen Toleranzgrenze liegt.

Grundsätzlich soll das Verfahren zur Verifikation auch durchgeführt werden können für die Verifikation von VÜGs, die nicht gemäß dem beschriebenen Verfahren ausgerichtet worden sind.

Es wird in der vorgenannten DE 10 2011 050 660 darauf hingewiesen, dass das Verfahren sowohl zur Ausrichtung, als auch zur Verifikation der Ausrichtung als Software auf dem VÜG bzw. der Kamera installiert sein kann und das Verfahren zur Verifikation sowohl online als auch offline im Backoffice auf einem Rechner durchgeführt werden kann, um anhand von erstellten Aufnahmen zu prüfen, ob das VÜG richtig ausgerichtet war. Damit ergäbe sich die Möglichkeit die Kontrolle auf solche Aufnahmen zu beschränken, deren Richtigkeit z. B. im Zusammenhang mit der Ahndung von Geschwindigkeitsverstößen bezweifelt werden.

Das vorbeschriebene Verfahren hat den Nachteil, dass in der Abbildung eine Mehrzahl von in Fahrtrichtung verlaufenden Geraden dargestellt sein müssen, was zum einen bei dichtem Verkehrsaufkommen nur eingeschränkt möglich ist und zum anderen voraussetzt, dass am Messort die Fahrbahn geradlinig verläuft. Weiterhin müssen die in Fahrtrichtung verlaufenden Geraden im Bild vorzugsweise die einzigen, mindestens jedoch die dominante Mehrheit an Bildgeraden darstellen, was z. B. im innerstädtischen Bereich nicht gegeben ist.

Die Verifikation der Messposition erfolgt gemäß der vorbeschriebenen Verfahren ausschließlich mit demselben VÜG und damit derselben Kamera, mit der die Messposition auch eingerichtet wurde bzw. mit der eine Aufnahme aus der Messposition heraus erstellt wurde.

Der Erfindung liegt die Aufgabe zugrunde, ein Verfahren zur Verifikation einer Messposition zu finden, mit dem die Messposition mit verschiedenen Kameras und unabhängigen Fahrbahnmerkmalen verifiziert werden kann.

Diese Aufgabe wird mit einem Verfahren zum Verifizieren einer Messposition für ein Verkehrsüberwachungsgerät mit einer Kamera, welche durch die Eichposition einer Bezugsfläche definiert ist, zu der ein Verkehrsüberwachungsgerät in einer festen Lagebeziehung angeordnet werden kann, mit folgenden Verfahrensschritten gelöst.

Mit einer Kamera, eines in einer Messposition ausgerichteten Verkehrsüberwachungsgerätes, welches in einer festen Lagebeziehung zu einer Bezugsfläche angeordnet ist, die sich in einer Eichposition befindet, wenn das Verkehrsüberwachungsgerät in der Messposition ist, wird ein Eichreferenzbild von einer Straßenszene aufgenommen.

Später werden zur Verifizierung der Messposition mit einer Kamera, welche diese Kamera oder eine mitsamt dem Verkehrsüberwachungsgerät ausgetauschte andere Kamera sein kann, in Zeitabständen Eichtestbilder aufgenommen und mit dem Eichreferenzbild verglichen.

Falls die Eichtestbilder und das Eichreferenzbild mit unterschiedlichen Kameras erstellt wurden, werden die Abbildungsmodelle der Kameras, welche in ihren internen Abbildungseigenschaften bekannt sind, vor dem Vergleichen ineinander transformiert.

Aus dem Eichreferenzbild und den Eichtestbildern werden Abbildungen identischer statischer Prüfmerkmale ausgewählt, deren Lageabweichungen zueinander ermittelt und mit festgelegten Bildtoleranzgrenzen verglichen.

Bei Lageabweichungen innerhalb der Bildtoleranzgrenzen werden zuvor mit dem Verkehrsüberwachungsgerät durchgeführte Messungen als gültig bestätigt.

Bei Lageabweichungen außerhalb der Bildtoleranzen werden zuvor mit dem Verkehrsüberwachungsgerät durchgeführte Messungen verworfen.

Die Aufnahme der Eichtestbilder kann vorteilhaft während des Messbetriebes des Verkehrsüberwachungsgerätes erfolgen.

Das Verfahren ist besonders vorteilhaft, wenn andere Verkehrsüberwachungsgeräte für die Aufnahme der Eichtestbilder verwendet werden, als das Verkehrsüberwachungsgerät, mit dem die Aufnahme des Eichreferenzbildes erstellt wurde.

Als Prüfmerkmale werden vorteilhaft z. B. Körperkanten oder Körperecken stationärer Objekte im Objektfeld der Kamera ausgewählt, die als ein Kantensprung abgebildet werden.

Bei ermittelten Lageabweichungen, die außerhalb der Bildtoleranzgrenzen liegen, wird das VÜG vorteilhaft mit Hilfe der Kenntnis der Lageabweichung in seine Messposition neu ausgerichtet, indem die Bezugsfläche in ihrer Raumlage verändert wird, während weitere Eichtestbilder aufgenommen und mit dem Eichreferenzbild verglichen werden, bis die Lageabweichungen der Abbildungen der Prüfmerkmale innerhalb der Bildtoleranzgrenzen liegen.

Vorteilhaft wird die Messposition rechnerisch um die ermittelte Lageabweichung in eine neue Messposition transformiert, ein Eichtestbild mit dieser ermittelten Lageabweichung als ein neues Eichreferenzbild definiert und für eine nachfolgende Verifikation dieser neuen Messposition später erstellte Eichtestbilder mit diesem neuen Eichreferenzbild verglichen.

Die Erfindung soll nachfolgend anhand von Ausführungsbeispielen näher erläutert werden. Hierzu zeigt:
Fig. 1 ein in einer Messposition ausgerichtetes VÜG 1
Fig. 2a ein Beispiel für ein Eichreferenzbild aufgenommen mit einer Kamera 2 oder einer Eich-Kamera 2.1
Fig. 2b ein Beispiel für ein erstes Eichtestbild aufgenommen mit der Kamera 2 oder einer Mess-Kamera 2.2 mit einer gleichen Brennweite wie die Eich-Kamera 2.1
Fig. 2c ein Beispiel für ein zweites Eichtestbild aufgenommen mit einer Mess-Kamera 2.2 mit einer anderen Brennweite als die Eich-Kamera 2.1
Fig. 2d ein Beispiel für ein drittes Eichtestbild aufgenommen mit der Mess-Kamera 2.2, mit einer anderen Brennweite als die Eich-Kamera 2.1

Das Verfahren dient der Verifizierung der Messposition eines Verkehrsüberwachungsgerätes (VÜG) 1 mit einer Kamera 2. Es ist geeignet, um die Einhaltung einer Messposition zu verifizieren, die für ein selbes VÜG 1 eingerichtet wurde und dauerhaft beibehalten werden soll oder aber die Einnahme und Beibehaltung einer Messposition zu verifizieren, die bei Austausch eines in einer Messposition eingerichteten VÜG 1 durch ein anderes VÜG 1 eingenommen wurde.

Für eine klare Beschreibung des Verfahrens soll nachfolgend von einem VÜG 1 mit einer Kamera 2 gesprochen werden, wenn gemäß einem ersten Ausführungsbeispiel des Verfahrens in der Messposition ein Eichreferenzbild mit einer Kamera 2 erstellt wird, mit der auch später Eichtestbilder zur Verifizierung der Messposition erstellt werden bzw. wenn die Beschreibung auf alle Ausführungsbeispiele zutreffend ist.

Es soll anstelle eines VÜG 1 und einer Kamera 2 von einem Eich-VÜG 1.1 mit einer Eich-Kamera 2.1 und einem Mess-VÜG 1.2 mit einer Mess-Kamera 2.2 gesprochen werden, wenn das Verfahren gemäß einem zweiten Ausführungsbeispiel vorsieht, dass Eichtestbilder zur Verifizierung einer Messposition mit einer anderen Kamera 2 (Mess-Kamera 2.2) erstellt werden, als mit der Kamera 2 (Eich-Kamera 2.1) mit der zuvor ein Eichreferenzbild in der Messposition erstellt wurde, nachdem ein VÜG 1 (Eich-VÜG 1.1), für welches die Messposition eingerichtet wurde, gegen ein anderes VÜG 1 (Mess-VÜG 1.2) ausgetauscht wurde.

Die unterschiedliche Begriffswahl dient dabei nur zur Unterscheidung der VÜGs 1 bzw. der Kameras 2, dass heißt es kann sich bei dem Eich-VÜG 1.1 und dem Mess-VÜG 1.2 und damit bei der Eich-Kamera 2.1 und der Messkamera 2.2 um unterschiedliche, aber auch gleiche Geräte, nicht aber um dieselben Geräte handeln.

Insbesondere die Möglichkeit der Verifikation einer Messposition für ein Mess-VÜG 1.2 ist aus wirtschaftlichen Gründen von großem Interesse. Es können durch einen Betreiber an verschiedenen Orten sogenannte Dummys, die durch Gehäuse gebildet werden, in denen sich von außen unbemerkt kein VÜG 1 befindet, aufgestellt werden, in welche wahlweise, zeitlich nacheinander, VÜGs 1 eingesetzt werden. Damit diese, möglichst ohne dass deren Messposition erst eingerichtet werden muss, in Betrieb genommen werden kann, werden diese definiert in den Dummys positioniert.

Dazu befindet sich im Inneren der Dummys eine Aufnahme für das VÜG 1, das heißt eine justierbare Montageeinheit 3 mit einer Bezugsfläche 4, an welcher ein VÜG 1 in einer definierten Position zur Bezugsfläche 4 fixiert wird/werden kann. Die definierte Position kann z. B. durch Führungen, Anschläge oder Justierstifte bestimmt sein.

Das VÜG 1 umfasst eine Kamera 2 und einen Messsensor 5, wobei die Kamera 2 auch selbst den Messsensor 5 darstellen kann. Das VÜG 1 wird bei der Geräteeichung bereits werksseitig so justiert, dass die Kamera 2 und gegebenenfalls der Messsensor 5 eine feste Relativlage zueinander einnehmen, die sie auch in einer Messposition, aus der der Messbetrieb des VÜG 1 erfolgt, miteinander einnehmen. Die Position und Rotation der Kamera 2 zu einer Basisfläche des VÜG 1, über welche die Relativlage des VÜG 1 zur Bezugsfläche 4 festgelegt wird, wird ebenfalls bei der Geräteeichung festgelegt und kann in einem Gerätedatensatz abgespeichert werden. Bei dieser Geräteeichung können auch die internen Abbildungseigenschaften der Kamera 2 ermittelt und im Gerätedatensatz abgespeichert werden. Nachdem das VÜG 1 in eine definierte feste Lage zur Bezugsfläche 4 positioniert wurde, wird über die Justage der Montageeinheit 3, die um drei Achsen eines kartesischen Koordinatensystems verkippt werden kann, das VÜG 1 in eine Messposition gebracht. Hierzu sind aus dem Stand der Technik verschiedene Verfahren bekannt, die sich insbesondere in Abhängigkeit von der Art des Messsensors 5 und der Messaufgabe unterscheiden. Ein Beispiel hierfür ist in der vorgenannten Patentanmeldung DE 10 2011 050 660, welche in der Beschreibung des Standes der Technik gewürdigt wurde, gegeben. Für das erfindungsgemäße Verfahren ist es ohne Bedeutung wie die Messposition des VÜGs 1 eingerichtet wird.

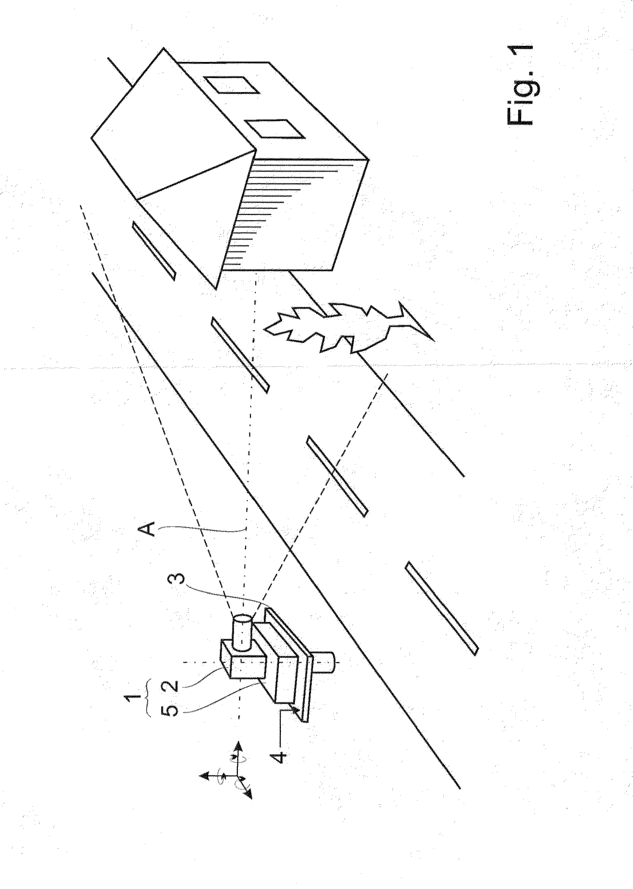

Das erfindungsgemäße Verfahren geht von einem in einer Messposition eingerichteten VÜG 1 und damit von einer in einer Eichposition eingerichteten Bezugsfläche 4 aus. Die Eichposition der Bezugsfläche 4 ist durch die örtliche Lage und die Rotation der Bezugsfläche 4 bezogen auf ein ortsfestes kartesisches Koordinatensystem bestimmt. In Fig. 1 ist eine am Fahrbahnrand einer Straße aufgestellte Montageeinheit 3 mit einer Bezugsfläche 4 gezeigt, auf der ein VÜG 1 mit einer Kamera 2 und einem Messsensor 5, der z. B. ein Radarsensor oder ein Laserscanner sein kann, montiert ist. Das VÜG 1 wurde durch ein vorheriges Verkippen um drei Achsen der Montageeinheit 3 in die Messposition gebracht. Diese Messposition ist durch die Raumlage der optischen Achse A der Kamera 2 und der Bildsensormatrix der Kamera 2 bezogen auf das kartesische Koordinatensystem bestimmt. Sie kann z. B. durch die Winkellage der optischen Achse A der Kamera 2 mit einem horizontalen Messwinkel zum Fahrbahnrand und einem vertikalen Messwinkel zur Fahrbahnoberfläche und der Relativlage der Bildsensormatrix, nämlich deren Zeilenausrichtung, zu einer horizontalen Ebene angegeben werden. Das Verfahren gemäß einem ersten Ausführungsbeispiel beginnt indem mit der Kamera 2, des in einer Messposition eingerichteten VÜGs 1 ein Eichreferenzbild erstellt wird. Zu späteren Zeitpunkten werden durch dieselbe Kamera 2 Eichtestbilder erstellt, mit deren Hilfe für den Zeitpunkt der Bilderstellung die Einhaltung der Messposition verifiziert wird. Da das Eichreferenzbild und die Testreferenzbilder (gemeinsam Bilder genannt) mit derselben Kamera 2 erstellt werden, gehorchen die Bilder demselben Abbildungsmodell und die Bilder können unmittelbar miteinander verglichen werden. Zu diesem Zweck werden in den Bildern, das heißt aus den Bilddaten, Abbildungen geeigneter Prüfmerkmale, z. B. Körperkanten oder Körperecken stationärer Objekte im Objektfeld der Kamera 2, die als ein Kantensprung abgebildet werden, ausgewählt und deren Lage in den Bildern auf Übereinstimmung überprüft. Dabei kann eine Lageabweichung sowohl durch translatorische Verschiebungen (Lageverschiebung) als auch durch Verdrehung (Lageverdrehung) der Kamera 2 gegenüber ihrer Messposition verursacht werden.

Davon ausgehend, dass das VÜG 1 mit der Kamera 2 in sich stabil ist, kann aus den Lageabweichungen auf eine Dejustierung der Bezugsfläche 4 geschlossen werden.

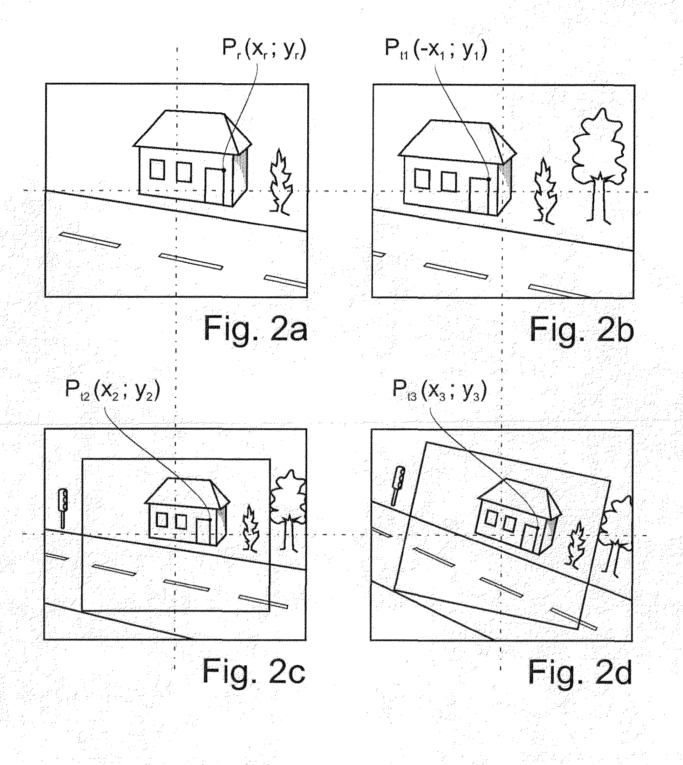

In Fig. 2a ist ein Eichreferenzbild und in Fig. 2b ist ein erstes Eichtestbild, aufgenommen mit derselben Kamera 2 wie das Eichreferenzbild, dargestellt. Beide Bilder folgen deshalb dem gleichen Abbildungsmodell, weshalb die ausgewählten Prüfmerkmale eine identische Abbildung in den Bildern bewirken, die im Falle der eingehaltenen Messposition am gleichen Ort und in einer gleichen Ausrichtung zu den Bildkanten abgebildet werden.

Bei dem in Fig. 2b dargestellten Eichtestbild ist die Abbildung eines Prüfmerkmals, hier eine Kante bzw. Ecke einer Haustür, in der Abbildung vereinfacht auf einen Punkt reduziert, in ihrer Lage verschoben.

Die Lage der Abbildung Prüfmerkmals P, bezogen auf ein bildeigenes Koordinatensystem durch die Bildmitte, ist in dem Eichreferenzbild, gezeigt in Fig. 2a, durch die Werte (xᵣ, yᵣ) und in dem ersten Eichtestbild, gezeigt in Fig. 2b, durch die Werte (xₜ₁, yₜ₁) angegeben. Die unterschiedliche Lage der Abbildungen von P im ersten Eichtestbild, im Vergleich zur Lage im Eichreferenzbild, ergibt sich ausschließlich aus einer Lageverschiebung der Kamera 2.

Es wird geprüft, ob die Lageverschiebung innerhalb festgelegter Bildtoleranzgrenzen oder außerhalb dieser Bildtoleranzgrenzen liegen. Liegt die Lageverschiebung innerhalb der Bildtoleranzgrenzen, so werden vorherige oder zeitgleiche Messungen, welche mit dem VÜG 1 vorgenommen wurden, für gültig erklärt. Liegt die Lageverschiebung außerhalb dieser Bildtoleranzgrenzen müssen vorherige oder zeitgleiche Messungen verworfen werden.

Bei einer Lageabweichung, die außerhalb der Bildtoleranzgrenzen liegt, kann das VÜG 1 mit Hilfe der Kenntnis der Lageabweichung neu geeicht werden, das heißt in seine Messposition neu ausgerichtet werden, wobei das erneute Eichen mit Hilfe des hier beschriebenen Verfahrens erfolgen kann, indem die Bezugsfläche 4, zu der sich das VÜG 1 in einer festen Anordnung befindet, in ihrer Raumlage verändert wird, während weitere Eichtestbilder aufgenommen und mit dem Eichreferenzbild verglichen werden, bis die Lageabweichungen der Abbildungen der Prüfmerkmale innerhalb der Bildtoleranzgrenzen liegen.

Anstelle des erneuten Eichens, was eine gezielte mechanische Bewegung der Bezugsfläche 4 erfordert, wozu auch geeignete Mittel vorhanden sein müssen, die auch entsprechend betätig werden müssen, kann eine bekannte Lageabweichung auch genutzt werden, um die ursprüngliche Messposition rechnerisch um diese Lageabweichung in eine neue Messposition zu transformieren. Ein Eichtestbild mit dieser Lageabweichung wird dann als ein neues Eichreferenzbild definiert und für eine nachfolgende Verifikation dieser neuen Messposition werden später erstellte Eichtestbilder mit diesem neuen Eichreferenzbild verglichen. Dabei wird das erfindungsgemäße Verfahren analog angewendet.

Der Vergleich zwischen den Bilddaten der Eichtestbilder und dem Eichreferenzbild zur Bestimmung der Lageabweichung ist praktisch allerdings nicht so einfach wie oben beschrieben. Sie können aufgrund von Rauschen, unterschiedlicher Beleuchtungsbedingungen und nicht-statischer Szenen in der Regel nicht direkt zum Vergleich verwendet werden.

So wird z. B. zur Rauschunterdrückung ein Tiefpassfilter auf die Bilddaten angewandt.

Eine weitgehende Beleuchtungsinvarianz kann durch Verwenden der Abbildung von Objektkanten (wie oben bereits vorgeschlagen) und nachfolgende Normierung erreicht werden.

Die Erkennung statischer Szenenmerkmale kann über die Aufnahme mehrerer Eichreferenzbilder über einen längeren Zeitraum umgesetzt werden. Für eine so entstehende Bildreihe werden Bildkanten identifiziert, die in allen Eichreferenzbildern identisch vorhanden sind. Eine solche Bildreihe wird einmal unmittelbar nach der Einrichtung der Messposition aufgenommen, um die Abbildungen statischer Szenenmerkmale einmalig zu erfassen und in einem Standortdatensatz zu speichern.

Die festgelegten Bildtoleranzgrenzen für die Lageabweichung ergeben sich aus den Objekttoleranzgrenzen, die von der Messaufgabe bestimmt sind. Soll z. B. zur Erfassung eines Rotlichtverstoßes das Fahrzeug beim Überfahren eines Haltebalkens während der Rotlichtphase fotographisch erfasst werden, so muss der Messsensor 5, z. B. ein Laserscanner so zum Haltebalken ausgerichtet werden, dass bei der Messung einer vorbekannten Entfernung unter einem dem Messpunkt zuordenbaren vorbekannten Scannwinkel, das Fahrzeug auch tatsächlich den Haltebalken passiert. Wird in diesem Moment ein Foto mit der sich ebenfalls in Messposition befindenden Kamera 2 ausgelöst, so ist das Fahrzeug z. B. mit seinen Vorderrädern auf dem Haltebalken abgebildet. Ist das VÜG 1 gegenüber der Messposition verstellt, so kann die sich daraus ergebende Lageabweichung des abgebildeten Fahrzeuges wie auch der abgebildeten Prüfmerkmale der abgebildeten Verkehrszene als innerhalb einer Bildtoleranzgrenze ergeben, wenn diese z. B. in Fahrtrichtung erfolgte und sich als außerhalb der Bildtoleranzgrenze ergeben, wenn sie entgegen der Fahrtrichtung erfolgte.

Die festgelegten Bildtoleranzgrenzen für die Lageabweichung der abgebildeten Prüfmerkmale werden ebenfalls im Standortdatensatz abgespeichert.

Das Verfahren gemäß einem zweiten Ausführungsbeispiel beginnt gleich dem ersten Ausführungsbeispiel indem mit einer Kamera 2, die hier eine Eich-Kamera 2.1 ist, eines in einer Messposition eingerichteten VÜGs 1, welches hier ein Eich-VÜG 1.1 ist, ein Eichreferenzbild erstellt wird. Nachdem dieses Eich-VÜG 1.1 durch ein Mess-VÜG 1.2 ausgetauscht wurde, werden durch eine Mess-Kamera 2.2 zeitlich nacheinander Eichtestbilder erstellt, mit deren Hilfe für den jeweiligen Zeitpunkt der Erstellung der Eichtestbilder die Einrichtung und später die Einhaltung der Messposition für das Mess-VÜG 1.2 verifiziert wird. Da die Bilder nicht mit derselben Kamera 2 erstellt werden, gehorchen die Bilder nicht demselben Abbildungsmodell und die Bilder können nicht unmittelbar miteinander verglichen werden.

Das Abbildungsmodell der Kamera 2 wird bestimmt durch die internen Abbildungsparameter der Kamera 2 sowie der Relativlage (Position und Rotation) der Kamera 2 zum Koordinatensystem. Die Abbildungsmodelle der Eich-Kamera 2.1 und der Mess-Kamera 2.2 können sich, insbesondere verursacht durch unterschiedliche Abbildungsparameter, wie die Brennweite des Kameraobjektives, unterscheiden. Grundsätzlich können sie sich auch unterscheiden, verursacht durch eine unterschiedliche Relativlage der Kamera 2 im Koordinatensystem.

Im Sinne der Erfindung soll jedoch die Auswirkung einer Dejustierung der Bezugsfläche 4, über welche die Kamera 2 mittelbar im Koordinatensystem liegt, nicht bei der Bildung des Abbildungsmodells beachtet werden, da ja genau diese Dejustierung aus dem Vergleich der Eichtestbilder mit dem Eichreferenzbild ermittelt werden soll. Das heißt, hier würde nur eine gegebenenfalls unterschiedliche Relativlage der Eich-Kamera 2.1 und der Mess-Kamera 2.2 zur Bezugsfläche 4 in die Bildung der Abbildungsmodelle einfließen.

Während es für das erste Ausführungsbeispiel des Verfahrens nicht zwingend erforderlich ist, dass die internen Abbildungsparameter (intrinsischen Parameter) der Kamera 2 und die Parameter der relativen Raumlage der Kamera 2 zur Bezugsfläche 4 bekannt ist, müssen alle diese Parameter für ein Verfahren gemäß dem zweiten Ausführungsbeispiel für die Eich-Kamera 2.1 und die Mess-Kamera 2.2 bekannt sein, um daraus jeweils das Abbildungsmodell für die Eich-Kamera 2.1 und die Mess-Kamera 2.2 zu bilden.

Um das Eichreferenzbild auf die Eichtestbilder bzw. umgekehrt zu normieren werden die beiden Abbildungsmodelle ineinander transformiert.

Wie solche Abbildungsmodelle gebildet und ineinander transformiert werden, ist einem Fachmann auf dem Gebiet der Optik und der Bildverarbeitung bekannt.

Ein Verfahren nach dem zweiten Ausführungsbeispiel wird in den nachfolgenden Schritten gleich dem ersten Ausführungsbeispiel fortgeführt.

In den Fig. 2c und 2d sind ein zweites und eine drittes Eichtestbild, diesmal aufgenommen mit der Mess-Kamera 2.2, gezeigt. Das Eichreferenzbild dargestellt in Fig. 2 wurde für dieses zweite Ausführungsbeispiel mit der Eich-Kamera 2.1 aufgenommen.

Vergleicht man das in Fig. 2c gezeigte zweite Eichtestbild mit dem Eichreferenzbild in Fig.2a so ist erkennbar, dass sich das Abbildungsmodell der Eich-Kamera 2.1 zu dem Abbildungsmodell der Mess-Kamera 2.2 unterscheidet, allerdings nur verursacht durch eine unterschiedliche Brennweite der beiden Kameraobjektive. Bei der Transformation der Abbildungsmodelle ineinander wird in diesem Fall das Abbildungsmodell, welches dem Kameraobjektiv mit kürzerer Brennweite zugeordnet ist auf das Abbildungsmodell, welches dem Kameraobjektiv mit längerer Brennweite zugeordnet ist, umgerechnet. Dass wie hier in dem konkreten Beispiel das Abbildungsmodell der Eich-Kamera 2.1 auf das Abbildungsmodell der Mess-Kamera 2.2 gerechnet wird, ist nur beispielhaft, es kann ebenso umgekehrt sein. Nach Transformation der Abbildungsmodelle ineinander wird deutlich, dass die Abbildung eines ausgewählten Prüfpunktes in dem Eichreferenzbild und dem zweiten Eichtestbild zueinander keine Lageabweichung aufweisen, womit mittels dem zweiten Eichtestbild die Messposition verifiziert ist.

Die Lage der Abbildung des Prüfmerkmals P, bezogen auf ein bildeigenes Koordinatensystem, ist in dem zweiten Eichtestbild, gezeigt in Fig. 2c, durch die Werte (xₜ₂, yₜ₂) angegeben. Die unterschiedliche Lage von P im zweiten Eichtestbild, im Vergleich zur Lage im Eichreferenzbild, gezeigt in Fig. 2a, ergibt sich nur aus den unterschiedlichen Abbildungsmodellen der Eich-Kamera 2.1 und der Mess-Kamera 2.2. Vergleicht man das in Fig. 2d gezeigte dritte Eichtestbild mit dem Eichreferenzbild in Fig.2a so ist erkennbar, dass sich das Abbildungsmodell der Eich-Kamera 2.1 zu dem Abbildungsmodell der Mess-Kamera 2.2 in gleicher Weise unterscheidet wie soeben erläutert. Nach Transformation der Abbildungsmodelle ineinander wird deutlich, dass die Abbildung eines ausgewählten Prüfpunktes in dem Eichreferenzbild und dem dritten Eichtestbild zueinander eine Lageabweichung aufweisen, die auf eine Dejustierung der Bezugsfläche 4 hinweist.

Die Lage der Abbildung des Prüfmerkmals P, bezogen auf ein bildeigenes Koordinatensystem, ist in dem dritten Eichtestbild, gezeigt in Fig. 2d, durch die Werte (xₜ₃, yₜ₃) angegeben. Die unterschiedliche Lage von P im dritten Eichtestbild, im Vergleich zur Lage im Eichreferenzbild, gezeigt in Fig. 2a, ergibt sich aus den unterschiedlichen Abbildungsmodellen der Eich-Kamera 2.1 und der Mess-Kamera 2.2 und einer Lageabweichung der Mess-Kamera 2.2.

Eine Dejustierung der Bezugsfläche 4 kann verschiedenste Ursachen haben, wie z. B. Materialermüdung, Fehlbedienung oder unbefugte Manipulation.

Die Einhaltung der Messposition des VÜG 1 muss daher überwacht und bewiesen werden, was mit einem erfindungsgemäßen Verfahren möglich ist.

### Bezugszeichenliste

| | |
|---|---|
| 1 | Verkehrsüberwachungsgerät / VÜG |
| 1.1 | Eich-VÜG |
| 1.2 | Mess-VÜG |
| 2 | Kamera |
| 2.1 | Eich-Kamera |
| 2.2 | Mess-Kamera |
| 3 | Montageeinheit |
| 4 | Bezugsfläche |
| 5 | Messsensor |
| A | optische Achse |

## Patentansprüche

1. Verfahren zum Verifizieren einer Messposition für ein Verkehrsüberwachungsgerät (1) mit einer Kamera (2), welche durch die Eichposition einer Bezugsfläche (4) definiert ist, zu der das Verkehrsüberwachungsgerät (1) in einer festen Lagebeziehung angeordnet werden kann,
bei dem mit der Kamera (2) des in einer Messposition ausgerichteten Verkehrsüberwachungsgerätes (1), welches in einer festen Lagebeziehung zu der Bezugsfläche (4) angeordnet ist, die sich in der Eichposition befindet, ein Eichreferenzbild von einer Straßenszene aufgenommen wird und zur Verifizierung der Messposition mit einer Kamera (2), welche diese Kamera (2) oder eine mitsamt dem Verkehrsüberwachungsgerät (1) ausgetauschte andere Kamera (2) sein kann, in Zeitabständen Eichtestbilder aufgenommen werden, die mit dem Eichreferenzbild verglichen werden,
zum Vergleich der Eichtestbilder mit dem Eichreferenzbild die Abbildungsmodelle der gegebenenfalls unterschiedlichen Kameras (2), welche in ihren internen Abbildungseigenschaften bekannt sind, zuvor ineinander transformiert werden,
aus dem Eichreferenzbild und den Eichtestbildern Abbildungen identischer statischer Prüfmerkmale ausgewählt werden, deren Lageabweichungen zueinander ermittelt und mit festgelegten Bildtoleranzgrenzen verglichen werden,
um bei Lageabweichungen innerhalb der Bildtoleranzgrenzen zuvor mit dem Verkehrsüberwachungsgerät (1) durchgeführte Messungen als gültig zu bestätigen und bei Lageabweichungen außerhalb der Bildtoleranzen zuvor mit dem Verkehrsüberwachungsgerät (1) durchgeführte Messungen zu verwerfen.

2. Verfahren zum Verifizieren einer Messposition nach Anspruch 1, **dadurch gekennzeichnet, dass**
die Aufnahme der Eichtestbilder während des Messbetriebes des Verkehrsüberwachungsgerätes (1) erfolgt.

3. Verfahren zum Verifizieren einer Messposition nach Anspruch 1 oder 2, **dadurch gekennzeichnet, dass**
zur Aufnahme der Eichtestbilder ein anderes Verkehrsüberwachungsgerät (1) verwendet wird als zur Aufnahme des Eichreferenzbildes.

4. Verfahren zum Verifizieren einer Messposition nach einem der vorhergehenden Ansprüche, **dadurch gekennzeichnet,**
**dass** als Prüfmerkmale, z. B. Körperkanten oder Körperecken stationärer Objekte im Objektfeld der Kamera (2), die als ein Kantensprung abgebildet werden, ausgewählt werden.

5. Verfahren zum Verifizieren einer Messposition nach einem der vorhergehenden Ansprüche, **dadurch gekennzeichnet,**
**dass** bei ermittelten Lageabweichungen, die außerhalb der Bildtoleranzgrenzen liegen, das VÜG (1) mit Hilfe der Kenntnis der Lageabweichung in seine Messposition neu ausgerichtet wird, indem die Bezugsfläche (4) in ihrer Raumlage verändert wird, während weitere Eichtestbilder aufgenommen und mit dem Eichreferenzbild verglichen werden, bis die Lageabweichungen der Abbildungen der Prüfmerkmale innerhalb der Bildtoleranzgrenzen liegen.

6. Verfahren zum Verifizieren einer Messposition nach einem der Ansprüche 1 - 4, **dadurch gekennzeichnet,**
**dass** die Messposition rechnerisch um diese ermittelte Lageabweichung in eine neue Messposition transformiert wird, ein Eichtestbild mit dieser ermittelten Lageabweichung als ein neues Eichreferenzbild definiert wird und für eine nachfolgende Verifikation dieser neuen Messposition später erstellte Eichtestbilder mit diesem neuen Eichreferenzbild verglichen werden.
